# EUROPEAN PATENT SPECIFICATION

(11) **EP 0 581 598 B1**
(45) Date of publication and mention of the grant of the patent: **18.09.1996**
(21) Application number: 93306015.4
(22) Date of filing: 29.07.1993
(51) Int. Cl.: H02K 7/02, H02K 21/18

(54) **Synchronous motor**
Synchronmotor
Moteur synchrone

(30) Priority: 31.07.1992 JP 53876/92
(43) Date of publication of application: 02.02.1994
(73) Proprietor: MABUCHI MOTOR KABUSHIKI KAISHA, Matsudo-shi, Chiba-ken (JP)
(72) Inventor: Kouhei, Igarashi, c/o Mabuchi Motor Kabushiki K., Inba-gun, Chiba.ken (JP)
(74) Representative: Hitchcock, Esmond Antony

(56) References cited:
- DE-U- 8 807 108
- PATENT ABSTRACTS OF JAPAN vol. 016, no. 200 (E-1201)13 May 1992
- FEINWERKTECHNIK & MESSTECHNIK vol. 87, no. 4, June 1979, M NCHEN DE pages 163 - 169 H.SCHEMMANN 'Zweipolige Einphasen-Synchronmotoren mit dauer-magnetischem L ufer'
- FEINWERKTECHNIK & MESSTECHNIK vol. 93, no. 3, April 1985, M NCHEN DE pages 145 - 147 DIPL.-ING. H.J.PLAUMANN 'Zweipoliger Einphasen-Synchronmotor mit hochremanentem Permanentmagnet-Rotor'
- PATENT ABSTRACTS OF JAPAN vol. 10, no. 65 (E-388)(2122) 14 March 1986
- PATENT ABSTRACTS OF JAPAN vol. 11, no. 294 (E-544)22 September 1987

## Description

This invention relates to a permanent-magnet synchronous motor of the type used for driving domestic equipment such as can openers and juicers.

While synchronous electric motors perform very well with predetermined supply voltages, changes in supply voltage lead to erratic performance and eventual failure. The present invention adapts synchronous motor design to enable satisfactory operation over a wider range of supply voltages. Particularly, it seeks to enable a motor of given specification to be driven either in synchronous operation or normal operation.

In German Specification No. 8,807,108, a synchronous motor is described in which the motor rotor is attached to the motor shaft by a coupling. One half of the coupling is provided on the end face of the rotor, and is connected by a spring to the second half of the coupling which is fixed onto the motor shaft.

Various constructional features of synchronous motors are discussed in two papers published in the German Journal entitled "Feinwerktechnik und Messtechnik", having respective references as follows: Vol. 87, 1979, No. 4 pp 143 to 169, and Vol. 93, 1985, No. 3, pp 145 to 147. The latter considers the behaviour of motor rotors having different moments of inertia at different input voltages.

The present invention is directed at a synchronous motor of the type comprising a substantially cylindrical rotor having a permanent magnet with a plurality of magnetic poles on the outer circumferential surface thereof; an end cap made of a non-magnetic material, the rotor being supported by bearings in the end cap; and a stator having a pair of opposite magnetic poles made of a soft magnetic material and excitation coils therefor, and formed into a substantial U-shape in a cross-sectional plane traversing the rotational axis of the rotor. According to the invention, an inertial-mass element made of a non-magnetic material is integrally fitted to at least one end of the rotor in the end cap, to establish the range of input voltages over which the rotor can maintain stable rotation. Normally, the end cap is fitted to a side end face of the stator magnetic poles.

The inertial mass element is made of a non-magnetic material, in order to minimise its influence on motor operation. It can be fitted at one or each end of the rotor, either directly to the rotor or on the motor shaft. A wide variety of shapes may be adopted, although its principle dimension will normally be arranged orthogonally relative to the motor axis.

Synchronous motors of the invention can use the same main component members, despite being intended for different voltage specification. The moment of inertia of the rotor can be adjusted for optimum operation with a given supply voltage without changing the external shape of the motor, and makes it possible to control the input voltage at which the rotor can maintain normal rotation within a desired range. This leads to a substantial improvement in production efficiency.

Further features and advantages of the invention will be apparent from the following description, by way of example, of a motor of the prior art, and some embodiments of the invention. Reference will be made to the accompanying schematic drawings wherein:
Figure 1 is a partially sectioned side view illustrating a known synchronous motor;
Figure 2 is another partially cross-sectioned view of the motor of Figure 1, taken on line A-A thereof;
Figures 3A and 3B are plan views of rotors embodying the present invention;
Figures 4A to 4E are end views illustrating typical shapes for the inertial-mass elements of Figures 3A and 3B;
Figure 5A is a graph showing the relationship between input voltage and current in a synchronous motor embodying this invention; and
Figure 5B is a graph showing the relationship between input voltage and current in a synchronous motor of the prior art.

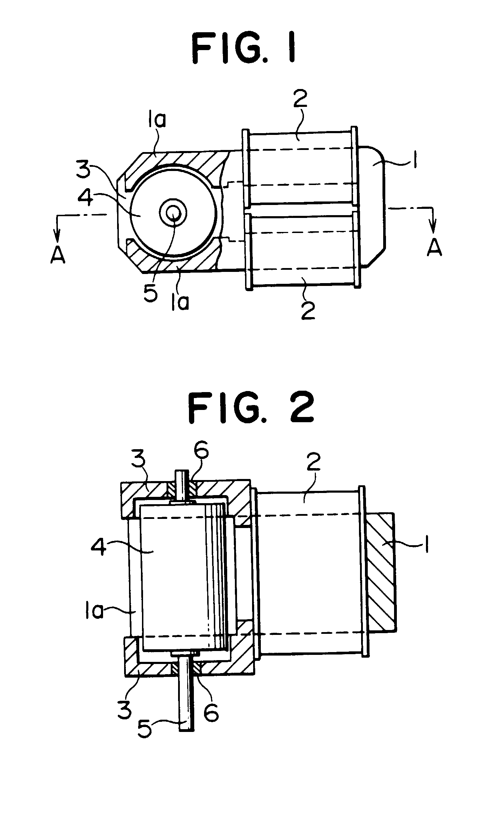

The motor shown in Figures 1 and 2 comprises a stator 1 made of a soft magnetic material such as laminated silicon steel sheets, formed into an essentially U shape, with a pair of opposing magnetic poles 1a provided at the ends of both arms thereof. Excitation coils 2 are fitted to the arms of the stator 1 and connected to an A.C. power supply (not shown) to generate an alternating magnetic field in the magnetic poles 1a.

An end cap 3 made of a non-magnetic material, such as nylon resin or aluminum alloy, is fitted to the motor in juxtaposition to each side end face of the magnetic poles 1a of the stator 1. A substantially cylindrical rotor 4 is rotatably mounted between the magnetic poles 1a of the stator 1 by means of a shaft 5 running in bearings 6 provided on the end cap 3. The rotor 4 comprises a permanent magnet, such as hard ferrite, and has N and S magnetic poles extending in the axial direction on the outer circumferential surface thereof and disposed alternately at equal intervals in the circumferential direction. The rotor 4 may be of the so-called two-pole type in which two permanent magnets formed into a circular arc shape in cross section are disposed in such a manner as to face each other across the shaft 5.

With the construction just described, as alternating voltage is applied to the exciting coils 2 of the stator 1, an alternating magnetic field is generated between the magnetic poles 1a. Magnetic attraction and repulsion are thus generated between the stator 1 and the rotor 4, which in turn cause the rotor 4 to rotate at a speed in synchronism with the frequency of the alternating voltage. This is as a result of the equilibrium between the torque and the moment of inertia of the rotor. It is generally believed that the highest efficiency can be achieved when the synchronous motor is operated in the vicinity of the synchronous speed.

Synchronous motors of conventional construction however, can operate erratically when the value of the A.C. voltage applied to the excitation coils is greater than a design limit. For example, when a synchronous motor having a Japanese standard voltage rating of 200 volts is used in the European Community area (230-250 volts), the motor passes into a state of irregular rotation, and operates in a unpredictable manner.

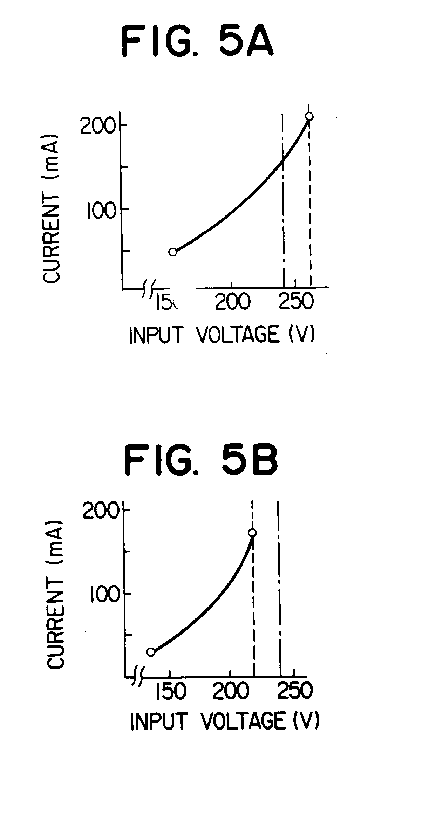

Figure 5B illustrates the relationship between input voltage and current for the synchronous motor of the conventional type shown in Figures 1 and 2. In Figure 5B, the range shown by a solid line is a range of normal rotation, while irregular rotation occurs when the input voltage exceeds the level shown by a broken line (220 volts, for example). The motor can certainly not operate at a working voltage of 240 volts as shown be a chain line in the figure. The behaviour of the rotor 4 is as follows.

In testing a synchronous motor of the kind shown in Figures 1 and 2, an A.C. input voltage applied to the excitation coils 2 is gradually increased from zero. The rotor 4 follows a cycle of oscillation - irregular rotation - normal rotation - irregular rotation - oscillation. In a range where the input voltage remains low, the current flowing in the excitation coils 2 also remains low, and the torque exerted on the rotor 4 is often smaller than the moment of inertia of the rotor 4. In these circumstances, the rotor 4 simply cannot rotate, or merely oscillates

As the current in the excitation coils 2 increases with increases in the input voltage, the rotor 4 rotates in one direction. However, since the above-mentioned torque is not yet sufficiently large relative to the moment of inertia of the rotor 4, changes in angular speed in one rotation is too large to maintain stable running. (Irregular rotation)

As the input voltage further increases, the torque exerted on the rotor 4 reaches equilibrium with the moment of inertia of the rotor 4. Speed fluctuations therefore diminish, leading to stable (normal) rotation. The range of normal rotation is indicated by a solid line in Figure 5B.

As the input voltage is further increased, the torque exerted on the rotor 4 becomes excessively large, and breaks the balance with the moment of inertia of the rotor 4, causing increasing speed fluctuations and making it impossible to maintain stable rotation. This state occurs in a range in which the input voltage exceeds the level (220 volts, for example) shown by the broken line in Figure 5B.

If the input voltage increases further, then so does the torque exerted on the rotor 4, compared with the moment of inertia of the rotor 4. As a result, synchronism with the rotor 4 is lost, and the motor reverts to oscillatory movement of the rotor. This occurs because the moment of inertia of the rotor 4 loses balance with the torque exerted by the magnetic field of the stator 1 and the magnetic field of the permanent magnet of the rotor 4.

The above problem can be met by increasing the moment of inertia of the rotor 4 by fitting an inertial-mass member to the rotating shaft 5, for example where it protrudes outward from the end cap 3. However, this runs the risk of interference with driven equipment. It is also difficult to provide an inertial-mass element in a limited space in the motor. Providing a longer rotating shaft 5 to enable an inertial mass to be installed requires additional space and poses additional problems in other applications where no inertial-mass member is needed. On the other hand, designing and manufacturing synchronous motors of different voltage specifications complicates production schedules and lowers production efficiency.

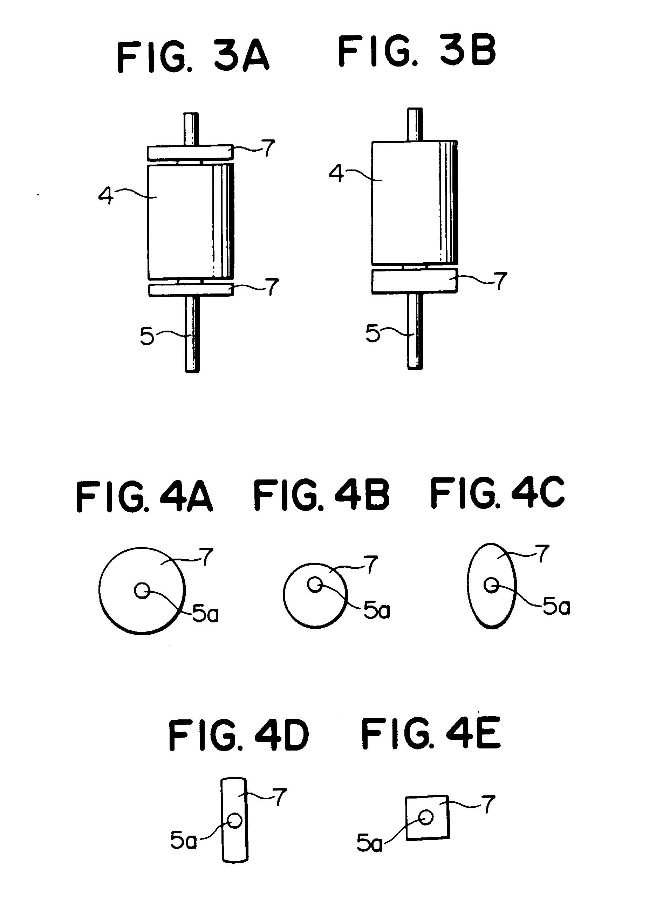

Figures 3A and 3B show an inertial-mass element 7 made of a non-magnetic material, such as lead, zinc, copper and stainless steel, formed into a plate shape and fitted integrally to one or both ends of the rotor 4. If the inertial-mass element 7 was made of a ferromagnetic material, such as steel, and incorporated between the magnetic poles 1a and 1a of the stator 1, as shown in Figures 1 and 2, it would adversely affect the amount and distribution of magnetic fluxes exerted on the rotor 4. For this reason, the element 7 is made of a non-magnetic material.

The contour of the inertial-mass element 7 projected on a plan orthogonally intersecting the axis of the rotor 4 can assume various geometrical shapes as shown in Figures 4A through 4E. Each of these Figures shows a hole 5a for the rotating shaft 5 shown in Figures 3A and 3B.

As will be apparent from Figure 5A, the range of input voltage where normal rotation is possible for a synchronous motor embodying this invention is approximately 150 - 260 volts, a significantly higher range, compared with Figure 5B illustrating the range for a known synchronous motor. Consequently, a synchronous motor of the invention can satisfactorily continue normal rotation even at an input voltage of 240 volts as shown by a chain line in Figure 5A. Thus, by adopting the aforementioned construction, even synchronous motors having a Japanese standard voltage rating of 200 volts can be used in the European Community area (230 volts), and even when input voltage fluctuates, they can maintain normal rotation without irregular rotation up to about 260 volts, for example.

In the illustrated embodiments, each inertial-mass element 7 is formed into a plate having a hole in which the rotation shaft 5 is received. Each element 7 may however, be fitted more directly to an end face of the rotor 4. Further, the shape, dimensions, fixing means, etc of the element 7 may be selected appropriately so long as the inertial-mass element 7 does not interfere with the stator 1 and other component members in the end cap 3 (refer to Figures 1 and 2).

## Claims

1. A synchronous motor comprising a substantially cylindrical rotor (4) having a permanent magnet with a plurality of magnetic poles on the outer circumferential surface thereof; an end cap (3) made of a non-magnetic material, the rotor being supported by bearings (6) in the end cap (3); and a stator (1) having a pair of opposite magnetic poles (1a) made of a soft magnetic material and excitation coils (2) therefor, and formed into a substantial U-shape in a cross-sectional plane traversing the rotational axis of the rotor (4),
CHARACTERISED IN THAT
an inertial-mass element (7) made of a non-magnetic material is integrally fitted to at least one end of the rotor (4) in the end cap (3), to establish the range of input voltages over which the rotor can maintain stable rotation.

2. A synchronous motor according to Claim 1 wherein the end cap (3) is fitted to a side end face of the stator magnetic poles (1a).

3. A synchronous motor according to Claim 1 or Claim 2 wherein the inertial-mass element (7) is fixedly fitted directly to an end face of the rotor.

4. A synchronous motor according to Claim 1 or Claim 2 wherein the inertial-mass element (7) is fitted to the shaft (5) of the rotor (4).

5. A synchronous motor according to any preceding Claim wherein an inertial-mass is fitted at each end of the rotor (4).

6. A synchronous motor according to any preceding Claim wherein the inertial-mass element (7) is circular in cross-section, and intersects orthogonally with the rotational axis of rotor (4).

7. A synchronous motor according to any of Claims 1 to 5 wherein the inertial-mass element has a non-circular shape in cross-section, which intersects orthogonally with the rotational axis of the rotor (4).

## Patentansprüche

1. Synchronmotor, aufweisend einen im wesentlichen zylindrischen Rotor (4), der einen Permanentmagneten mit mehreren Magnetpolen an seiner äußeren Umfangsfläche aufweist; eine Endkappe (3), die aus nicht-magnetischem Material hergestellt ist, wobei der Rotor durch Lager (6) in der Endkappe (3) gelagert ist; und einem Stator (1), der ein Paar gegenüberliegender Magnetpole (1a) aufweist, die aus einem weichmagnetischen Material gefertigt sind, und Anregungsspulen (2) hierfür aufweist und in einer Querschnittsebene, die die Rotationsachse des Rotors (4) durchquert, im wesentlichen U-förmig ausgebildet ist,
**dadurch gekennzeichnet**,
daß ein Trägheitsmassenelement (7), das aus einem nicht-magnetischen Material hergestellt ist, integral an zumindest ein Ende des Rotors (4) in der Endkappe (3) angesetzt ist, um den Bereich von Eingangsspannungen zu schaffen, über den der Rotor eine stabile Drehung beibehalten kann.

2. Synchronmotor nach Anspruch 1, in welchem die Endkappe (3) an eine seitliche Endfläche der Stator-Magnetpole (la) angesetzt ist.

3. Synchronmotor nach Anspruch 1 oder Anspruch 2, in welchem das Trägheitsmassenelement (7) direkt an eine Endfläche des Rotors fest angepaßt ist.

4. Synchronmotor nach Anspruch 1 oder Anspruch 2, in welchem das Trägheitsmassenelement (7) an der Welle (5) des Rotors (4) angesetzt ist.

5. Synchronmotor nach einem vorhergehenden Anspruch, in welchem an jedes Ende des Rotors (4) eine Trägheitsmasse angesetzt ist.

6. Synchronmotor nach einem vorhergehenden Anspruch, in welchem das Trägheitsmassenelement (7) im Querschnitt kreisförmig ist und sich mit der Rotationsachse des Rotors (4) senkrecht schneidet.

7. Synchronmotor nach einem der Ansprüche 1 bis 5, in welchem das Trägheitsmassenelement im Querschnitt von einer nicht kreisartigen Form ist, welche sich mit der Rotationsachse des Rotors (4) senkrecht schneidet.

## Revendications

1. Moteur synchrone comprenant un rotor sensiblement cylindrique (4) avec un aimant permanent et une pluralité de pôles magnétiques sur sa surface circonférencielle extérieure ; un capuchon d'extrémité (3) réalisé en un matériau non magnétique, le rotor étant monté sur des paliers (6) dans le capuchon d'extrémité (3) ; et un stator (1) avec une paire de pôles magnétiques opposés (1A) réalisés en un matériau magnétique doux et des bobines d'excitation (2) correspondantes, et sensiblement en forme de U dans le plan transversal traversant l'axe de rotation du rotor (4),
caractérisé en ce que
un élément à masse d'inertie (7) réalisé en un matériau non magnétique est monté solidairement sur au moins une extrémité du rotor (4) dans le capuchon d'extrémité (3), pour établir la plage de tensions d'entrée sur lesquelles le rotor peut maintenir une rotation stable.

2. Moteur synchrone selon la revendication 1, dans lequel le capuchon d'extrémité (3) est monté sur une face d'extrémité latérale des pôles magnétiques de stator (1A).

3. Moteur synchrone selon la revendication 1 ou 2, dans lequel l'élément à masse d'inertie (7) est monté à demeure directement sur une face d'extrémité du rotor.

4. Moteur synchrone selon l'une quelconque des revendications précédentes, dans lequel l'élément à masse d'inertie (7) est monté sur l'arbre (5) du rotor (4).

5. Moteur synchrone selon l'une quelconque des revendications précédentes, dans lequel une masse d'inertie est montée sur chaque extrémité du rotor (4).

6. Moteur synchrone selon l'une quelconque des revendications précédentes, dans lequel l'élément à masse d'inertie (7) de section transversale circulaire vient en intersection orthogonalement avec l'axe de rotation du rotor (4).

7. Moteur synchrone selon l'une quelconque des
revendications 1 à 5, dans lequel l'élément à masse d'inertie a une section transversale de forme non circulaire qui vient en intersection orthogonalement avec l'axe de rotation du rotor (4).
